(19) Europäisches Patentamt
European Patent Office
Office européen des brevets

(11) **EP 3 087 135 B1**

(12) **EUROPEAN PATENT SPECIFICATION**

(45) Date of publication and mention of the grant of the patent:
**11.11.2020 Bulletin 2020/46**

(21) Application number: **14875609.1**

(22) Date of filing: **23.12.2014**

(51) Int Cl.:
*C08L 23/10* *(2006.01)*       *C08L 23/12* *(2006.01)*
*C08L 23/16* *(2006.01)*

(86) International application number:
**PCT/US2014/072262**

(87) International publication number:
**WO 2015/100374 (02.07.2015 Gazette 2015/26)**

(54) **PROPYLENE-BASED COMPOSITIONS OF ENHANCED APPEARANCE AND EXCELLENT MOLD FLOWABILITY**

PROPYLENBASIERTE ZUSAMMENSETZUNGEN MIT ERWEITERTEM ERSCHEINUNGSBILD UND HERVORRAGENDER FLIESSFÄHIGKEIT

COMPOSITIONS À BASE DE PROPYLÈNE D'ASPECT AMÉLIORÉ ET À EXCELLENT ÉCOULEMENT EN MOULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2013 US 201314138352**

(43) Date of publication of application:
**02.11.2016 Bulletin 2016/44**

(73) Proprietor: **Braskem America, Inc.**
**Philadelphia, PA 19103-7583 (US)**

(72) Inventors:
• **SALEK, Jeffrey, S.**
**Philadelphia, PA 19103 (US)**
• **MAJEWSKI, Rita, A.**
**Philadelphia, PA 19103 (US)**

(74) Representative: **Murgitroyd & Company**
**Murgitroyd House**
**165-169 Scotland Street**
**Glasgow G5 8PL (GB)**

(56) References cited:
EP-A1- 2 055 738        US-A- 6 005 034
US-A1- 2002 035 191     US-A1- 2004 097 650
US-A1- 2008 045 638     US-A1- 2012 157 599
US-A1- 2012 302 701     US-B1- 6 759 465
US-B2- 6 964 997        US-B2- 7 750 081
US-B2- 7 863 379        US-B2- 7 935 766
US-B2- 8 552 116

EP 3 087 135 B1

**Description**

FIELD

The present disclosure relates to a propylene-based composition of excellent surface appearance manifested by combined enhancement of tiger (flow) marking performance and low gels count, as well as excellent mold flowability and stiffness-impact balance, a process of making the same and an article made of the composition.

BACKGROUND

In order to achieve enhanced tiger marking performance of impact copolymer polypropylene (ICP) compositions with respect to injection molding of a large/long part typically used for automotive applications (as described below), introduction of a very high molecular weight (MW) (or equivalently high intrinsic viscosity (I.V.) rubber phase, e.g., ethylene-propylene (EPR) copolymer or a copolymer of propylene with other alpha-olefins) is often required, which results in a high viscosity ratio between the rubber phase and the matrix (e.g., propylene-based polymer such as homopolymer polypropylene (HPP)), causing a high count of large polymeric gels that are detrimental to surface appearance and final part paintability. The use of specialized filter media (e.g., media of very low porosity) can reduce the number of large gels to some degree; however, their presence can be still detrimental to the surface appearance of the molded parts. In addition, the use of specialized filter media for break-up of large gels can have negative implications on extruder die pressures, that in turn could limit production rates as well as contribute to increased manufacturing costs.

Snyder (1999) [Snyder, A., "A Unique High Stiffness, High Melt Flow Impact PP Copolymer From a Solvent/Slurry Process, 9th International Business Forum on Specialty Polyolefins, Scotland (SPO 99) Conference, October 12-13, 1999, Houston, Texas] describes a slurry/solvent process pertinent to the production of particular propylene based products. Bimodal operation between the R1 and R2 HPP reactors of the solvent/slurry process was discussed. The average weight molecular weight (Mw) of 900,000 g/mol of the copolymer xylene soluble (XS) fraction implied the existence of a very high rubber I.V. (i.e., at least 6 dl/g). This reference does not teach the tiger marking, gels and volatiles performance of the particular propylene based compositions. The Snyder (1999) reference is specific to a slurry/solvent process and does not cover a bulk or gas phase polymerization process, as contemplated by the present disclsoure. A great disadvantage of the slurry/solvent process is the generation of high levels of volatiles in the final composition, which is highly undesirable in compounds used for automotive parts due to creation of unpleasant odors or release of harmful vapors during the lifetime of the final molded part. In addition, a slurry/solvent process has a serious disadvantage of creating an additional waste handling issue in the process due to the solvent extraction step.

A series of patents (U.S. Patent Nos. 4,771,103, 5,461,115 and 5,854,355) disclose a continuous process for production of an ethylene block copolymer having reduced fish eyes. A key element in reducing fish eyes is the feeding of a glycol compound to the degassing stage between the homo- (first stage) and copolymerization stage. The slurry/solvent process described in these patents generates high levels of volatile organic compounds in the final product compared to bulk/gas processes, which is highly undesirable in the automotive industry, which requires materials of reduced volatiles emissions. In addition, a slurry/solvent process is not efficient from a production rate viewpoint relative to a bulk/gas phase process, similar of that of the present disclosure. This process has also a serious disadvantage of creating an additional waste handling issue due to the solvent extraction step. Another drawback of these references is that effectiveness of their processes in terms of reducing fish eyes in combination with excellent tiger marking performance has not been achieved, taught or proven for a bulk/gas phase polymerization process similar to that of the present disclosure.

Several other compounds, primarily antistatic agents, are known to reduce sheeting and fouling caused by deposition and agglomeration/adherence of fine particles on the reactor walls and/or clogging of charge and discharge pipes. These agents are preferentially found on fine particles due to the larger surface/volume ratio compared to large particles. Several references (U.S. Patent No. 5,410,002, US 2008/0161610A1, US 2005/0203259 A1) disclose the use of antistatic compositions as antifouling agents but fail to teach the combination of reduced gels (in the bulk) and excellent tiger-marking or flowability.

Mitsutani et al. in U.S. Patent No. 6,466,875 discloses a method for estimating the gel content of propylene block copolymers obtained by a continuous process which can optionally use a classifier and/or chemical additive. Both options act to reduce the number of particles with high rubber content in the second stage by returning to the first stage reactor particles having short residence time (classifier), or selectively poisoning short residence time particles from the first stage (chemical additive). However, this reference fails to teach the combination of low gel count and excellent tiger marking performance of the composition (especially at impact copolymers of high viscosity ratio) as in the present disclosure.

U.S. Patent Nos. 6,777,497 and 7,282,537 relate to compositions utilizing high I.V. ethylene-propylene random copolymers plus a propylene-based component (e.g., homopolymer) to influence low generation of flow marks in molded articles, little generation of granular structures (fish eyes) and enhanced balance of rigidity and toughness. One of the disadvantages of these compositions is poor low-temperature impact resistance due to the random copolymer component, which is substantially different from the ethylene-propylene rubber component of the present disclosure. There is a need for a propylene based composition exhibiting a combination of improved part appearance, high flowability, and excellent mechanical properties as provided by the present disclosure.

Grein et al. in U.S. Patent No. 7,504,455 relates to propylene based compositions which do not show flow marks and have good impact strength to stiffness ratio. While this reference discloses no flow marks of their composition, it fails to teach the performance in terms of surface appearance such as large gels due to the existence of the high I.V. rubber component (4-6.5 dl/g) that typically deteriorates the appearance of molded parts (high viscosity ratio).

U.S. Patent Nos. 6,518,363 and 6,472,477 disclose polypropylene compositions containing high I.V. propylene-ethylene random copolymer rubber portions as part of a compositional blend. These compositions are designed to produce molded articles with acceptable appearance defined by low flow marks and few fish eyes (granular structures). In the '363 patent, the composition comprises a blend of two propylene-ethylene block copolymers and an additional HPP phase. In the '477 patent, the composition comprises a blend of HPP and a propylene-ethylene block copolymer; compositions containing high I.V. rubber (e.g. I.V. > 6 dl/g) have not achieved a satisfactory degree of reduction of large gels count, negatively affecting the surface appearance. The present disclosure, which utilizes a single in-reactor ethylene-propylene copolymer composition presenting the advantage of process and molecular structure simplicity compared to the compositions of these references, further produces fish eye concentrations in much lower concentrations at high I.V. rubber.

U.S. 2006/0194924 claims a polyolefin masterbatch composition that can be injection-molded into large objects which exhibit improved surface properties, particularly with respect to reduction of tiger striping and gels. One limitation of these compositions is that generally the total composition MFR is rather low. These lower MFRs present the disadvantage of reduced mold fluidity. In addition, this reference defines good gel quality as an "average" diameter size of < 1500 microns. It is well known that gel sizes > 500 microns are quite undesirable due to poor aesthetics of large parts and negative effects on part paintability. The compositions in the present disclosure have the advantage of significantly improved surface appearance, since the average gel diameter size is well below 500 microns, in additional to improved mold flowability relative to this reference.

A number of other inventions (e.g., U.S. Pat. Nos. 6,441,081, 6,667,359 and 7,064,160) teach ICP compositions of excellent tiger marking performance, however they fail to teach or achieve the desired performance in gels count, while the structure of their claimed compositions is substantially different from that of the present disclosure.

SUMMARY

It has been now surprisingly discovered that a class of ICP compositions made with a solvent free polymerization process exhibit excellent tiger marking performance in large/long molded parts combined with very low gels count despite the high viscosity ratio (e.g., > 4) between the rubber and matrix phases. This is counterintuitive and unexpected, since a high viscosity ratio (needed for stabilization of the flow front in the mold and reduction of tiger marking severity) normally leads to numerous large gels based on Weber dimensionless number principles published in the literature (e.g., "Polypropylene Handbook" by Nello Pasquini, 2nd Edition, 2005, pp. 226-227). The viscosity ratio effect on formation of large gels carries over in a filled compound using the composition as a formulation building component.

Furthermore, it has been surprisingly found that the inventive compositions are associated with a very low gels count even when using a quite coarse mesh wire screen, e.g., 60 mesh, independent of extruder screw type e.g., twin or single screw. Finally, the inventive compositions exhibit significantly reduced levels of volatiles as well as excellent stiffness-impact balance used either as standalone materials and/or in filled compounds. The significantly reduced gels count leads to excellent surface appearance and improved paintability of the molded parts (smoother surface).

According to a first embodiment, the present disclosure provides an impact copolymer propylene (ICP) composition comprising a polypropylene-based matrix of from 75% to 90% by weight of the composition, and an ethylene propylene copolymer rubber (EPR) phase of from 8% to 25% by weight of the composition, wherein the EPR phase comprises from 35% to 45% by weight of ethylene, a xylene solubles (XS) content of greater than 8 wt% as determined by acetone precipitation, and an intrinsic viscosity (I.V.) of greater than 6.5 dL/g, wherein the ICP composition has a MFR of from greater than 10 g/10min and a tanδ of less than 5.0 at 0.1 rad/s (180°C), wherein the polypropylene-based matrix has a melt flow rate (MFR) of greater than 125 g/10min.

The composition may comprise from 25% to 99% by weight of the ICP polymer composition as described herein and from 1% to 75% by weight of a second polymer composition comprising a high crystalline, high MFR homopolypropylene (HPP).

According to another embodiment, the present disclosure proves for a thermoplastic olefin (TPO) composition comprising from 60% to 70% by weight of an impact copolymer propylene (ICP) composition, from 15% to 20% by weight of a polyolefin elastomer, and from 15% to 20% by weight of talc. The impact copolymer propylene (ICP) composition comprises a polypropylene-based matrix of from 75% to 90% by weight of the composition, and an ethylene propylene copolymer rubber (EPR) phase of from 8% to 25% by weight of the composition, wherein the EPR phase comprises from 35% to 45% by weight of ethylene, a xylene solubles (XS) content of greater than 8 wt% as determined by acetone precipitation, and an intrinsic viscosity (I.V.) of greater than 6.5 dL/g, wherein the ICP composition has a MFR of greater than 10 g/10min and a tanδ of less than 5.0 at 0.1 rad/s (180°C), wherein the polypropylene-based matrix has a melt flow rate (MFR) of greater than 125 g/10min.

Still further embodiments of the present disclosure provide for an article of manufacture comprising a thermoplastic olefin (TPO) composition as described herein.

According to an additional embodiment, the present disclosure provides a method of making an impact copolymer polypropylene (ICP) composition. The method comprises polymerizing propylene in the presence of a Ziegler-Natta catalyst in a first stage comprising at least one bulk or gas phase polymerization reactor or combinations thereof to produce a polypropylene-based matrix; upon degassing, transferring the polypropylene-based matrix phase from the first stage to a second stage comprising at least one gas phase reactor; and polymerizing an ethylene propylene rubber (EPR) phase in the presence of the polypropylene-based matrix in the second stage to produce the EPR phase dispersed in the polypropylene-based matrix phase to produce the impact copolymer propylene composition, wherein the EPR phase comprises from 35% to 45% by weight of ethylene, has a xylenes solubles (XS) content of greater than 8 wt% as determined by acetone precipitation, and an intrinsic viscosity (I.V.) of greater than 6.5 dL/g, wherein the polypropylene-based matrix comprises from 75% to 90% by weight of the ICP composition and the EPR phase comprises from 8% to 25% by weight of the ICP composition, and wherein the ICP composition has a MFR of greater than 10 g/10min and a tanδ of less than 5.0 at 0.1 rad/s (180°C), wherein the polypropylene-based matrix has a melt flow rate (MFR) of greater than 125 g/10min.

BRIEF DESCRIPTION OF THE DRAWINGS

Embodiments of the invention will now be described by way of example with reference to the accompanying drawings.

Figure 1 illustrates the rheology response of the loss tangent (tanδ) as a function of angular frequency at 180 °C, representative of tiger marking performance, for inventive versus comparative compositions (standalone, i.e., not filled compounds) with MFR range of ~90-140 dg/min. In this and the following figures, all samples are pellets prepared with a 30 mm twin extruder using a 60 mesh wire screen. The relative difference in rheology response between inventive and comparative compositions was found to be independent of screw type and mesh size.

Figure 2 demonstrates the rheology response of tanδ as a function of angular frequency at 180 °C, representative of tiger marking performance, for comparative compositions (standalone, i.e., not filled compounds) with MFR range of ~15-17 dg/min.

Figure 3 illustrates a viscosity flow curve for comparative compositions with MFR range of ~15-17 dg/min corresponding to the tanδ profiles of Figure 1.

Figure 4 demonstrates onset distance of tiger marks as a function of tanδ (0.1 and 0.4 rad/s, 180 °C). Injection speed: 12.7 mm/s. The data points shown at 350 mm indicate that no tiger marking was observed. The filled compounds consist of 68.53% composition, 10% talc (Cimpact 710C, Rio Tinto), 21.32% impact modifier (Engage ENR 7467, Dow Chemical Company) and 0.15% antioxidant B225 (all percentages given by weight).

Figure 5 illustrates onset distance of tiger marks as a function of tanδ (0.1 rad/s, 180 °C) for standalone compositions. Injection speed: 12.7 mm/s. The data points shown at 350 mm indicate that no tiger marking was observed.

Figure 6 illustrates the relationship between storage modulus (G') and angular frequency for one embodiment of the ICP composition of the present disclosure compared to conventional ICP compositions. Figure 6B illustrates the relationship between tan delta (tanδ) and angular frequency for one embodiment of the ICP composition of the present disclosure compared to conventional ICP compositions.

Figure 7 illustrates the relationship between tan delta (tanδ) and angular frequency for one embodiment of the ICP composition of the present disclosure compared to conventional ICP compositions.

DETAILED DESCRIPTION OF THE INVENTION

In different applications that utilize ICPs, it is highly desirable to delay (and ideally eliminate) the onset of tiger / flow marking as far away from the gate of injection molded parts as possible. Tiger (flow) marking is defined as a viscoelastic melt flow instability that typically occurs in relatively long injection molded parts, where alternate dull and glossy regions occur beyond a certain distance from the gate (onset distance to flow marks). Tiger marking instability fundamentals have been described in the literature [e.g., Hirano et al., J. Applied Polym. Sci. Vol. 104, 192-199 (2007); Pathan et al., J. Applied Polym. Sci. Vol. 96, 423-434 (2005); Maeda et al., Nihon Reoroji Gakkaishi Vol. 35, 293-299 (2007)].

Tiger marking is highly undesirable due to unacceptable part appearance, especially for large/long injection molded parts. In addition to the delayed onset or elimination of tiger marking, it is highly desirable to reduce the count of large polymeric (rubber) particles (gels) as much as possible for best part surface appearance (aesthetics and paintability). The large gels (e.g., > 500 microns) are also particularly undesirable, since they are also detrimental to the impact resistance (e.g., falling weight impact strength). The tiger marking instability is particularly evident in filled compounds typically comprising the ICP composition, an external impact modifier (external rubber) and a filler (preferably talc), as disclosed in the paper by Hirano et al. (2007). To improve flowability in the mold and reduce mold cycle time, a high melt flow (MFR) ICP is desired as a component in the compounding formulation.

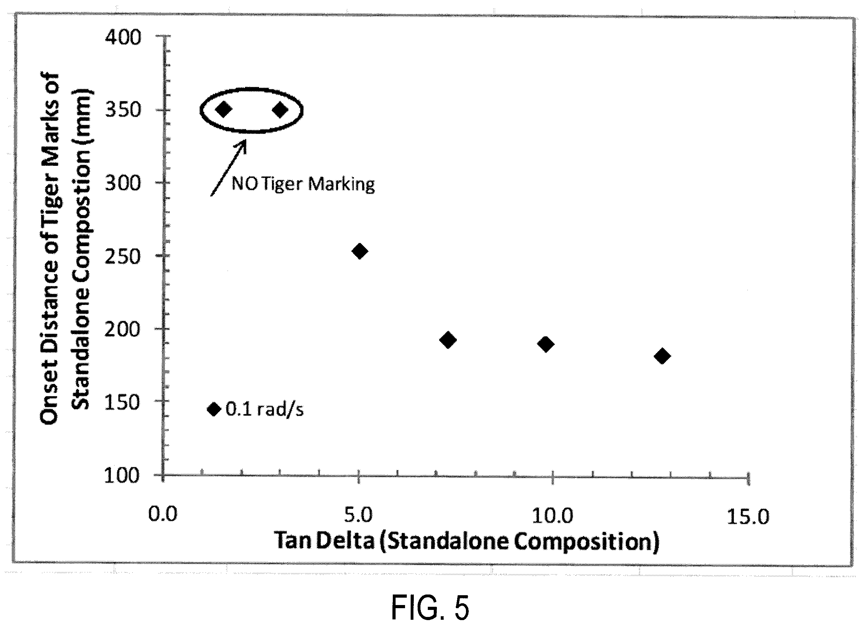

One way to improve tiger marking performance is to introduce a very high MW or equivalently high I.V. EPR component in the ICP composition that has been reported to stabilize the flow front in the mold [e.g. see Hirano et al. (2007), particularly their Figures 5-10]. In order to achieve high MFR of the overall ICP composition, the propylene based matrix needs to have a quite high MFR (e.g., > 200 dg/min for a composition MFR of about 100 dg/min). This results in a significant disparity in the viscosity between the HPP matrix and EPR, and therefore a high viscosity (approximated here by the intrinsic viscosity ratio) between the two phases. The high viscosity ratio normally results in reduced compatibility between the HPP matrix and EPR phase leading to formation of large polymeric rubber particles (gels), as described in "Polypropylene Handbook" by Nello Pasquini, 2nd Edition, 2005, pp. 226-227, based on Weber number (ratio of viscous over interfacial tension forces) principles. A viscosity ratio between the EPR and HPP phases of larger than about 4 results in significant difficulty to break-up large gels. The polymeric particles can typically have a size range up to about 1,700 microns or even higher, and particles with sizes above 500 microns, referred to herein as "large gels" or simply "gels" are particularly detrimental to the part surface appearance and as such are highly undesirable.

ICP compositions with excellent tiger marking performance (defined here as delayed onset of tiger marking or absence of tiger marks on the molded parts) and an excellent balance of mechanical properties in the filled compounds (such as elongation to break, stiffness and cold temperature impact/ductility) typically suffer from the existence of a significant count of large gels due to the presence of the high MW (I.V.) rubber phase that is not favorably compatible with the low viscosity (high MFR) propylene based matrix. In summary, the better the tiger marking performance, the worse the count of large gels in the composition due to the existence of a high MW component and the high viscosity ratio.

In one aspect of the invention, one purpose may be in the development of an ICP composition which exhibits the novel combination of excellent tiger marking performance, significantly reduced large gels count for enhanced surface appearance, exceptional mold flowability (e.g., high MFR, low viscosity) / reduced mold cycle time and excellent stiffness-impact balance in filled compounds, while retaining simplicity in its molecular structure as well as process of making. A filled compound typically comprises the ICP composition, an external elastomer / impact modifier and a filler (e.g., talc) as defined in the paper by Hirano et al. (2007). Specifically, the content of the filled compounds in percentage weight in the examples of the invention are: 68.53% composition, 10% talc (Cimpact 710C, Rio Tinto), 21.32% impact modifier (Engage ENR 7467, Dow Chemical Company) and 0.15% antioxidant B225. In order to improve extruder processability (e.g., high production rates and reduced die pressures), a relatively coarse mesh wire screen (e.g., 60 mesh screen) is also highly desirable, the use of which is opposite to the direction of breaking up large gels. Excellent tiger marking performance in combination with a small count of large gels using conventional mesh wire screens in the extruder is by nature counterintuitive, based on the viscosity ratio arguments discussed above. Finally, it is highly desirable for the novel ICP compositions to exhibit a low level of Volatile Organic Compounds (VOC) that can eliminate unpleasant odors or release of harmful vapors during the life of the final molded part, a feature achieved with the composition of the present disclosure.

METHODS

The compositions of the present disclosure are prepared in a sequential polymerization process wherein a propylene based polymer (defined as the ICP "matrix") is prepared first, followed by the preparation of a copolymer rubber. The composition described herein can be prepared using a Ziegler-Natta catalyst, a co-catalyst such as triethylaluminum ("TEA"), and optionally an electron donor including the non-limiting examples of dicyclopentyldimethoxysilane ("DPCMS"), cyclohexylmethyldimethoxysilane ("CMDMS"), diisopropyldimethoxysilane ("DIPDMS"), di-t-butyldimethoxysilane, cyclohexylisopropyldimethoxysilane, n-butylmethyldimethoxysilane, tetraethoxysilane, 3,3,3-trifluoropropylmethyldimethoxysilane, mono and di-alkylaminotrialkoxysilanes or other electron donors known in the art or combinations thereof. Examples of different generation Ziegler-Natta catalysts that can be applied to the practice of the present disclosure are described in the "Polypropylene Handbook" by Nello Pasquini, 2nd Edition, 2005, Chapter 2 and include, but are not limited to, phthalate-based, di-ether based, succinate-based catalysts or combinations thereof. The catalyst system is introduced at the beginning of the polymerization of propylene and is transferred with the resulting propylene based polymer to the copolymerization reactor where it serves to catalyze the gas phase copolymerization of propylene and ethylene (or a higher alpha-olefin) to produce the rubber phase (also referred to here as bi-polymer).

The propylene based polymer (matrix) may be prepared using at least one reactor and may be also prepared using a plurality of parallel reactors or reactors in series (stage 1). Preferably, the propylene based polymer process utilizes one or two liquid filled loop reactors in series. The term liquid or bulk phase reactor as used herein is intended to encompass a liquid propylene process as described by Ser van Ven in "Polypropylene and Other Polyolefins", 1990, Elsevier Science Publishing Company, Inc., pp. 119-125 excluding herein a slurry/solvent process where the liquid is in an inert solvent (e.g., hexane). Despite a preference for liquid filled loop reactors, the propylene polymer may also be prepared in a gas-phase reactor, a series of gas phase reactors or a combination of liquid filled loop reactors and gas phase reactors in any sequence as described in U.S. Patent No. 7,217,772. The propylene-based polymer is preferably made in a unimodal molecular weight fashion, i.e., each reactor of stage 1 produces polymer of the same MFR / MW. Despite the preference for a unimodal propylene-based polymer, a bimodal or multi-modal propylene-based polymer may be also produced in the practice of the present disclosure. In all the examples of the inventive compositions (Table 1), a combination of two liquid filled loop reactors in unimodal operation were used for production of the propylene based polymer (ICP matrix).

Propylene based polymer crystallinity and isotacticity can be controlled by the ratio of co-catalyst to electron donor, and the type of co-catalyst / donor system and is also affected by the polymerization temperature. The appropriate ratio of co-catalyst to electron donor is dependent upon the catalyst / donor system selected. It is within the skill of the ordinarily skilled artisan to determine the appropriate ratio and temperature to arrive at a polymer having the desired properties.

The amount of hydrogen necessary to prepare the propylene-based (matrix) component of the invention is dependent in large measure on the donor and catalyst system used. It is within the skill of the ordinary skilled artisan to select the appropriate quantity of hydrogen for a given catalyst/donor system to prepare a propylene polymer having the combination of properties disclosed herein (including MFR) without undue experimentation. Examples of propylene-based matrix include, but are not limited to, homopolymer polypropylene and random ethylene-propylene or generally random propylene-alpha olefin copolymer, where the comonomer includes, but is not limited to, C4, C6 or C8 alpha olefins or combinations thereof. In all examples of Table 1, the propylene-based polymer consists of 100% propylene (HPP).

Once formation of the propylene-based (matrix) polymer is complete, the resultant powder is passed through a degassing stage before passing to one or more gas phase reactors (stage 2), wherein propylene is copolymerized with ethylene (C2) or an alpha-olefin co-monomer including, but not limited to, C4, C6 or C8 alpha olefins or combinations thereof, in the presence of the propylene-based polymer produced in stage 1 and the catalyst transferred therewith. Examples of gas phase reactors include, but are not limited to, a fluidized (horizontal or vertical) or stirred bed reactor or combinations thereof.

Optionally, additional external donor may be added in the gas phase copolymerization process (second stage) as described in US 2006/0217502. The external donor added in the second stage may be the same or different from the external donor added to the first stage. In the examples of this invention (Table 1), external donor was added only on the first stage (loop liquid reactors).

A suitable organic compound/agent such as antistatic inhibitor or combination of organic compounds/agents are also added in stage 2, e.g., as taught in US 2006/0217502, US 2005/0203259 and US 2008/0161510 A1 and U.S. Patent No. 5,410,002. Examples of antistatic inhibitors or organic compounds include, but are not limited to, chemical derivatives of hydroxylethyl alkylamine available under the trade names ATMER® 163 and ARMOSTAT® 410 LM, a major antistatic agent comprising at least one polyoxyethylalkylamine in combination with one minor antistatic agent comprising at least one fatty acid sarcosinate or similar compounds or combinations thereof. An advantage of this invention is that the preferred antistatic inhibitors used in the process of making the composition, such as ATMER® 163 and ARMOSTAT® 410 LM, have FDA approval for food contact, thus expanding the range of applicability beyond automotive compounding applications. Furthermore, both ATMER 163 and ARMOSTAT 410 LM are listed in China suitable for food packaging, while ARMOSTAT 410 LM is included in European Union (EU) inventory lists as suitable for cosmetics related applications, further expanding the range of industrial applications of these additives in relation to the compositions of this invention.

For the copolymerization reaction, the gas phase composition of the reactor(s) is maintained such that the ratio of the moles of ethylene (or alpha-olefin) in the gas phase to the total moles of ethylene (or alpha-olefin) and propylene is held constant. In order to maintain the desired molar ratio and bi-polymer content, monomer feed of propylene and ethylene (or alpha-olefin) is adjusted as appropriate.

Hydrogen may be optionally added in the gas phase reactor(s) to control the MW (thus I.V.) of the copolymer rubber. In this context, MW is defined as the weight-average weight molecular weight. The composition of the gas phase is maintained such that the ratio of hydrogen to ethylene (mol/mol) referred to herein as R, is held constant. Similarly to the hydrogen control in the loops, required $H_2/C_2$ to achieve a target IV will depend on the catalyst and donor system. One skilled in the art should be able to determine the appropriate $H_2/C_2$ target. Despite the preference for a unimodal copolymer rubber (i.e., copolymer rubber of uniform I.V. and composition in co-monomer), a bimodal or multi-modal rubber copolymer (i.e., copolymer rubber with components of different I.V. or composition in co-monomer or type of co-monomer(s) or combinations thereof) is possible in the practice of the present disclosure.

In the case of a bimodal or multi-modal copolymer rubber composition, the "viscosity ratio" is defined as the I.V. of the highest MW rubber copolymer component over that of either (i) the I.V. of the propylene-based matrix in the case of unimodal matrix or (ii) the I.V. of the lowest MW component of the matrix in the case of a bimodal or multi-modal matrix. In the case of unimodal copolymer rubber, the "viscosity ratio" is defined as the I.V. of the acetone precipitated xylene solubles fraction (XS AP) over the I.V. of the xylene insolubles fraction of the composition (XIS). In all the examples of Table 1, C2 was used as the monomer to react with propylene in the gas phase reactor to produce a unimodal ethylene-propylene copolymer rubber.

The reactor process of the inventive compositions described above is referred to herein as "bulk/gas." Upon completion of the polymerization process, the polymer powder produced according to the above described procedure can be fed into an extruder. When an extruder is employed, typically a twin screw extruder is preferred in order to obtain the best possible melt mixing and phase dispersion. Despite the preference for a twin-screw extruder, other extruders known in the art, such as single screw extruders, may also be used to achieve the desired melt mixing.

The comparative compositions were either made with the bulk/gas reactor process using an appropriate set of reactor conditions to achieve the desired polymer attributes, or alternatively with a slurry/solvent process using hexane as a solvent as described in Snyder (1999) or in "Polypropylene," Report No. 128 by W.S. Fong, R.L. Magovern and M. Sacks, SRI International, Menlo Park, California, April 1980, referred to below as "solvent/slurry".

A 30 mm (screw diameter D) co-rotating twin screw extruder (ZSK-30, Werner & Pfleiderer (WP)/Coperion) with L/D=24 (screw diameter over screw length) and dual feeding system was used for compounding of the powder samples. The extruder contains two kneading mixing blocks and two counter-clockwise back mixing elements per screw. The extruder is coupled with a screen changer, a 1.5" diameter breaker plate and a melt pump (Xaloy Inc.). The die plate contains four holes of 0.125" diameter each. The same extruder conditions were employed for all samples for consistency and are summarized in Table 1. Both standalone compositions (i.e., compositions with barefoot additive package for extruder stabilization such as antioxidant, acid scavenger and optionally nucleator) and filled compounds were produced.

Table 1: Extruder conditions of 30 mm twin screw extruder used for all samples.

| Condition | Value (Standalone Resin) | Value (Filled Compound) |
|---|---|---|
| Temperature Zone 1 (°C) | 140 | 135 |
| Temperature Zone 2 (°C) | 170 | 165 |
| Temperature Zone 3 (°C) | 180 | 210 |
| Temperature Zone 4 (°C) | 180 | 210 |
| Temperature Zone 5 - Extruder Outlet (°C) | 180 | 210 |
| Temperature Zone 6 - Melt Pump (°C) | 180 | 210 |
| Temperature Zone 7 - Screen Changer (°C) | 180 | 210 |
| Temperature Zone 8 - Die (°C) | 180 | 210 |
| Screw Speed (rpm) | 250 | 150 |
| Melt Pump Suction Pressure (psi) | 100 | 250 |
| Feed Rate (lbs/hr) | 60 | 40 |
| Mesh Screen Porosity Rating | 60, 200, 75 AL3 FMF | 200 |
| *75 AL3 FMF = fiber metal felt screen (Purolator) with nominal porosity of 75 micron. **60 and 200 mesh refer to the porosity of standard square weave screens (Purolator). | | |

A 1.5" (38 mm screw diameter) "yellow jacket" single screw extruder (Wayne) with L/D=24 was also used for compounding of the powder (inventive and comparative compositions) samples. The screw contains a 4" long mixing zone and an 8" long external static mixer. The extruder is coupled with a screen changer having a 1.5" diameter breaker plate. The die plate contains six holes of 0.125" diameter each. The same extruder conditions were used for all samples for consistency and are summarized in Table 2. Note that the choice of extruder conditions for the single screw machine (Table 2) does not reflect equivalency in shear rates or temperature profiles with the conditions employed on the 30 mm twin screw (Table 1). Therefore, the sets of conditions on the two types of screws are independent from each other.

Table 2: Extruder conditions of 38 mm single screw extruder used for all samples. The process conditions refer to extrusion of standalone composition (i.e., not filled compound).

| Condition | Value |
|---|---|
| Temperature Zone 1 (°C) | 182 |
| Temperature Zone 2 (°C) | 182 |
| Temperature Zone 3 (°C) | 182 |
| Temperature Zone 4 (°C) | 182 |
| Temperature Die 1 (°C) | 193 |
| Temperature Die 2 (°C) | 193 |
| Temperature Die 3 (°C) | 193 |
| Screw Speed (rpm) | 150 |
| Feed Rate (lbs/hr) | ~58 |
| Mesh Screen Porosity Rating | 60, 200 |

The particle/gels size distribution was measured with a scanning digital camera system integrated with a cast film line. The model of the particle/gels tester is FSA (Film Surface Analyzer) of OCS (Optical Control Systems). The system is both high speed and high resolution with a programmable tool for visual observation of particles/gels. The conditions of the gels tester are typically the following:

Temperatures on extruder to die head range from 180-200 °C through 5 zones:
| | |
|---|---|
| Zone 1: | 180°C |
| Zone 2: | 190°C |
| Zones 3-5: | 200°C |
| Screw Speed: | 35 rpm |
| Chill Roll: | 12 m/min |
| Chill Roll Temperature : | 40°C |
| Film Thickness: | ~0.02 mm |
| Film Width: | ~ 4.5" (~ 11.4 cm) |
| Film Area Scanned: | 5 m$^2$ |

In this invention, the same set of conditions for the gels tester was used for all materials. The gels tester provides the particle size distribution in the range ~1-1,700 microns as number of particles per 1 m$^2$ of cast film in intervals of 100 microns (e.g., 500-600, 600-700 microns etc.). The gels performance of the composition is defined as "excellent" when the number of gels (> 500 microns) / m$^2$ of film (0.02 mm thickness) is less than about 300 for 60 mesh or less than about 100 for 200 mesh wire screens and less than about 50 with 75 AL3 FMF (Purolator) screens for the standalone composition (i.e., composition with barefoot additive package such as antioxidant and acid scavenger for extruder stabilization), when using a twin screw extruder to prepare the pellet samples (optionally including antioxidants, nucleators, acid scavengers, rubber modifiers or polyethylene), with the process conditions as described above. The use of a coarse mesh wire screen (e.g., 60 mesh), while still achieving low gels count in either a twin or single screw is particularly advantageous from an extrusion process viewpoint (e.g. higher production rates, less frequency of change of filter media, lower die pressures etc.). A composition not fulfilling any of the above gel count requirements is considered to have a "poor" gels performance, which is unacceptable.

Dynamic frequency sweep isothermal data were generated with a controlled strain/stress rheometer (model MCR 501, Anton Paar) with 25 mm parallel plates in a nitrogen purge to eliminate sample degradation. A frequency range of 0.1-300 rad/s at five points per decade was used at 180°C and 2 mm gap with strain amplitudes (~5-15%) lying within the linear viscoelastic region. The loss tangent (tan$\delta$) at low angular frequency (e.g. 0.1 and 0.4 rad/s) of the composition is defined here as a metric of tiger marking performance of the standalone composition and its filled compound consistent with the work of Maeda et al. (2007) [Maeda, S., K. Fukunaga, and E. Kamei, "Flow mark in the injection molding of polypropylene/rubber/talc blends," Nihon Reoroji Gakkaishi 35, 293-299 (2007)].

According to the theory, the flow in the front region becomes unstable when the shear stress exceeds the normal stress. Whether flow marks occur or not is controlled by the balance between the normal and shear stresses (related to tan$\delta$) in this region. The validity of this criterion was verified experimentally for the injection molding of polypropylene/rubber/talc blends [Maeda et al. (2007)]. It was found that the enhancement of melt elasticity at low shear rates effectively prevents the occurrence of flow marks on the molded parts [Maeda et al. (2007)].

Injection molded plaques made with a mold of 350 mm (length) x 100 mm (width) x 3 mm (thickness) were generated for both the standalone compositions and their filled compounds using a 170 Ton Van Dorn (HT Series) cold runner injection molding machine. The following injection molding conditions were used: barrel temperature: 400°F, mold cooling temperature: 83°F, screw speed: 100 rpm, injection speed: 25.4 mm/s, fill time: 2.1 s and cooling time: 17.1 s. The runner size was 12.7 mm, the fan gate thickness was 1.14 mm and the gate width was 82.6 mm. In all cases, a 2% by weight of a blue color masterbatch concentrate was added in the standalone composition or its filled compound to facilitate visualization of the tiger marks with the naked eye. Five plaques were made per material and condition and the reproducibility of the results was found to be excellent.

The tiger marking performance is defined as "excellent" in this invention in terms of both the standalone composition and its filled compound (defined previously) as (i) no tiger marks present or visible on the plaque or (ii) onset distance of tiger marks is beyond a critical distance away from the gate (e.g., the distance between the gate and the first tiger mark is about 75% or more of the total length of the plaque). The tiger marking performance is defined as "poor" when tiger marks are visible with an onset distance of tiger marks from the gate of less than about 75% of the total length of the plaque. It was found that for an impact copolymer polypropylene composition of MFR > 10 dg/min, a tan$\delta$ at 0.1 rad/s (180°C) of less than about 5 (standalone composition) resulted in excellent tiger marking performance for both the standalone composition and its filled compounds due to enhanced melt elasticity. A tiger marking ranking scale of 5-10 (worst to best) was also established based on visual observation of the plaques as follows: 9-10 "excellent" and 5-8 "poor."

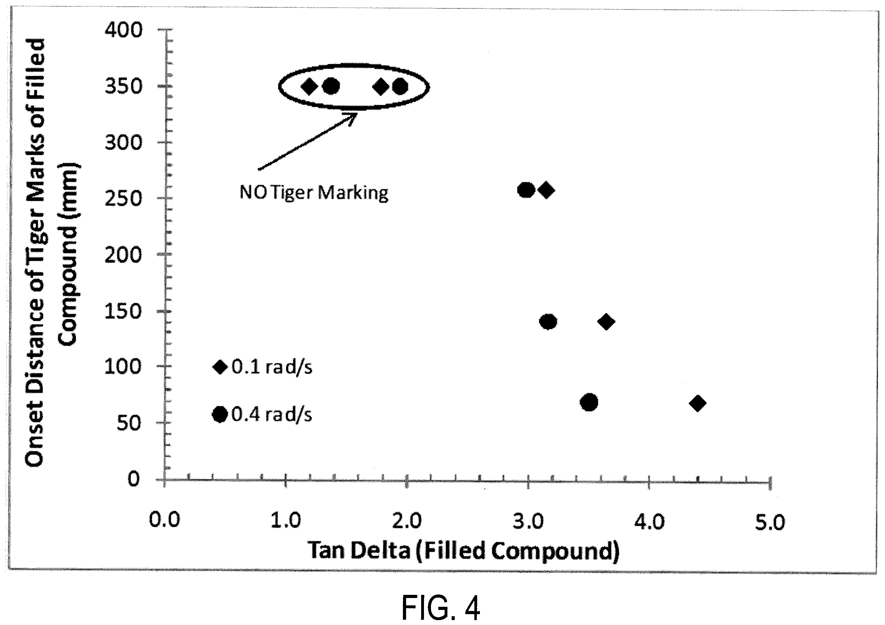

The correlation of the onset distance for tiger marking on the molded plaque with the tan$\delta$ at low frequencies was verified for both filled compounds and standalone compositions as shown in Figures 4 and 5, respectively. For filled compounds, as tan$\delta$ at low frequencies (e.g. 0.1-0.4 rad/s) decreases, the onset distance of tiger marking moves away from the gate (good). Since all materials depicted in Figure 4 consist of the composition in the same filled compound formulation [i.e., 68.53% composition, 10% talc (Cimpact 710C, Rio Tinto), 21.32% impact modifier (Engage ENR 7467, Dow Chemical Company) and 0.15% antioxidant B225] and produced with the same extruder conditions, differences in the onset distance of tiger marking of the filled compounds reflects differences in rheology (tan$\delta$ at low frequencies) of the base composition. In Figure 4, the data points corresponding to an onset distance of 350 mm indicate that no tiger marking was observed. These data points correspond to the inventive compositions I and III in the filled compounds. It is worthwhile noting that the inventive compositions I and III did not show any sign of tiger marking not only at the specified injection molding conditions (25.4 mm/s) but also within a wide range of conditions (e.g., injection speeds of 12.7-88.9 mm/s were tested with an interval of 12.7 mm/s).

In Figure 5, the correlation of the onset distance of tiger marks as a function of tan$\delta$ at 0.1 rad/s (180°C) for the standalone composition is shown to be directionally similar to that of the filled compounds (Figure 4). The inventive compositions I and III did not show any sign of tiger marking (onset distance indicated as the length of the plaque, i.e., 350 mm for plotting purposes) at 25.4 mm/s injection speed, but also no tiger marking was observed for a wide range of injection speeds (12.7-88.9 mm/s).

The weight percentage XS fraction of the ICP composition (including contribution of both rubber copolymer and the matrix xylene solubles) was determined according to ASTM D5492 using 2 g of composition in 200 ml of xylene. The percentage XIS fraction of the composition was determined as the difference of 100 minus the percentage XS.

The acetone precipitated xylene solubles fraction (XS AP) was measured according to the following method: 300 ml of pre-filtered acetone are poured into a 1000 ml flask. 100 ml of the XS filtrate recovered according to ASTM D5492 were added into the flask that contains the acetone. The flask was shaken vigorously for two (2) minutes and subsequently the system was allowed to set for at least 15 minutes. A dried filter is preweighed before being placed into a clean funnel, and the precipitate from the 1000 ml flask is filtered from the acetone. Clean acetone was rinsed several times to recover as much of the polymer as possible and remove any xylene residual. The filter was then dried in an oven at 65 °C for one (1) hour under a light vacuum with a $N_2$ purge. The filter was subsequently removed to a dry desiccator for 30 minutes before re-weighing. The material deposited on the filter was the XS AP fraction (or gummy or amorphous portion of the ICP composition). The percentage XS AP (copolymer amorphous) fraction was calculated as

follows:

$$\% \text{ XS AP} = \frac{2A}{S} \times 100$$

where:

A = weight of gummy (amorphous) material and filter minus the weight of the filter.
S = sample size (weight in grams of starting sample / composition which is originally added in 200 ml of xylene for execution of ASTM D5492 wet fractionation for recovery of the total XS fraction including XS contribution from both the copolymer and the matrix).

The I.V. of a specific species, e.g., the XS AP and XIS fractions of the composition, were measured in tetralin at 135°C using a Desreux-Bischoff dilution viscometer (Ubbelohde-type) on solutions with a concentration of 0.7 g/lt (concentration at 23°C).

The melt flow rate (MFR; units of g/10 min or dg/min) was measured per ASTM D1238 using a load of 2.16 kg at 230°C. One percent secant flexural modulus was measured according to ASTM D790 at 23°C. Notched Izod impact strength was measured at 23°C according to ASTM D256. Tensile properties including % strain at yield point and yield stress were determined according to ASTM D638-08. Ten (10) replicates were generated for each physical test and average values are reported.

High speed instrumented impact (IIMP) properties were measured according to ASTM D3763-08, using circular impact disks with a diameter of 4" and a thickness of 0.125" (10 replicates were measured for each test). The disks were produced via an injection molding process according to ASTM D4001. A striker mass of 22.49 kg was used. Impact height was 0.39 m and the impact velocity was 2.76 m/s. Measurements at -20°C were performed using a Ceast impact strength machine.

According to other embodiments, the present disclosure provides an impact copolymer propylene (ICP) composition that displays good property balance, such as impact, stiffness, flowability, while displaying enhanced aesthetic performance when incorporated into a thermoplastic olefin (TPO) composition, for example, gloss, reduced tiger marking, reduced surface defects, and improved die swell (melt elasticity), compared to conventional ICP polymer compositions. As discussed herein, the ICPs may comprise a highly crystalline homopolymeric polypropylene matrix (having less than 5% by weight of (co)monomeric units other than propylene) that displays high isotacticitiy for material stiffness, and an EPR dispersed phase having an EPR content with selected properties to provide an ICP polymer composition that can be incorporated into TPOs. Further, the ICP compositions have a high reactor melt flow (nominally at least 65-70 g/10min) and provide unique polymer attribute combinations at relatively high EPR loading to allow for high final c-TPO viscosities and thin walling (for light weighting) of parts. The resulting ICP compositions have a superior balance of physical properties that reduce the need for other components in the ICP or final TPO. For example, the ICP may display excellent cold temperature Izod performance in compounds. Such TPOs may be used for the manufacture of plastic articles requiring impact resistance properties, particularly large extrusion molded plastic articles, such as large automotive parts, for example bumper fascia.

According to certain embodiments, the ICP composition comprises a polypropylene-based matrix of from 75% to 90% by weight of the composition, and an ethylene propylene copolymer rubber (EPR) phase of from 8% to 25% by weight of the composition, wherein the EPR phase comprises from 35% to 45% by weight of ethylene, a xylenes solubles (XS) content of greater than 8 wt% as determined by acetone precipitation, and an intrinsic viscosity (I.V.) of greater than 6.5 g/dL. The composition has a MFR of greater than 10 g/10min and a tanδ of less than 5.0 at 0.1 rad/s (at 180°C), wherein the MFR of the polypropylene-based matrix phase is greater than 125 g/10min. According to other embodiments, the MFR or the polypropylene-based matrix may be greater than 200 g/10min, or greater than 225 g/10min, or even greater than 250 g/10min.

According to various embodiments of the ICP compositions described herein, the ICP compositions may have an EPR dispersed phase content of from 8% to 25% by weight or even from 10% to 15% by weight. In contrast to conventional ICP compositions, the ICP compositions of the present disclosure may display a higher I.V. (tetralin) for the EPR phase. For example, according to certain embodiments, the ICP compositions may have an EPR having an I.V. of greater than 6.5 dL/g. In other embodiments, the ICP compositions may have an EPR having an I.V. of greater than or equal to 7.0 dL/g and in specific embodiments, the ICP compositions may have an EPR having an I.V. ranging from 7.0 dL/g to 8.0 dL/g. In still other embodiments, the ICP compositions may have an EPR having an I.V. ranging from 7.0 dL/g to 7.5 dL/g or even from 7.1 dL/g to 7.3 dL/g. According to various embodiments, the EPR phase may display other characteristics that may improve the overall characteristics of the ICP and compositions made with the ICP. For example, according to certain embodiments, the EPR dispersed phase may be propylene rich and having a

$C_2$ content of from 35% to 45% by weight or event from 37% to 42% by weight. Further, according to various embodiments, the EPR dispersed phase may have an increased xylenes soluble (XS) content (determined using acetone precipitation) compared to EPR phases used in conventional ICP polymer compositions. For example, in certain embodiments, the XS content of the EPR phase may be greater than 8 wt% as determined by acetone precipitation. In other embodiments, the EPR phase may have a XS content of from 10 wt% to 15 wt% or even from 12 wt% to 15 wt%.

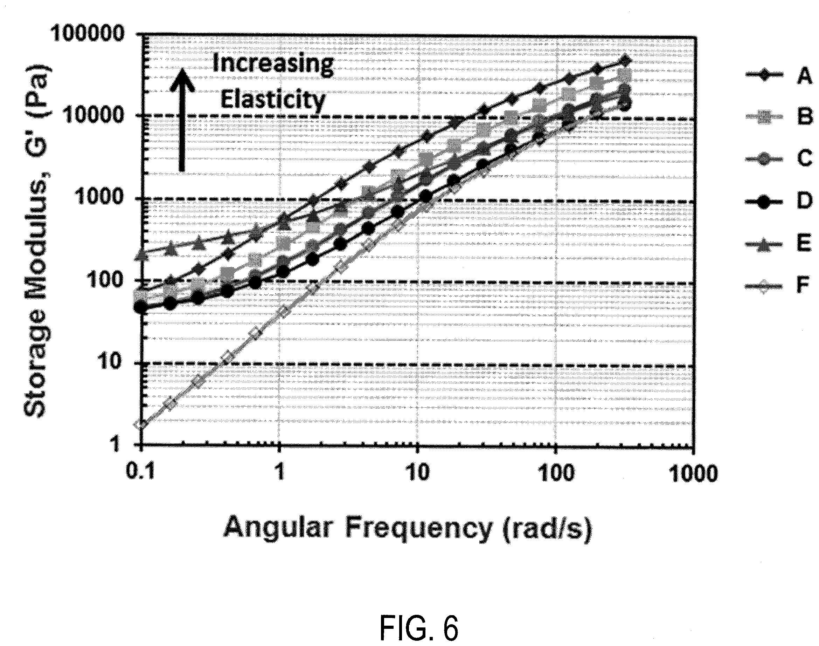

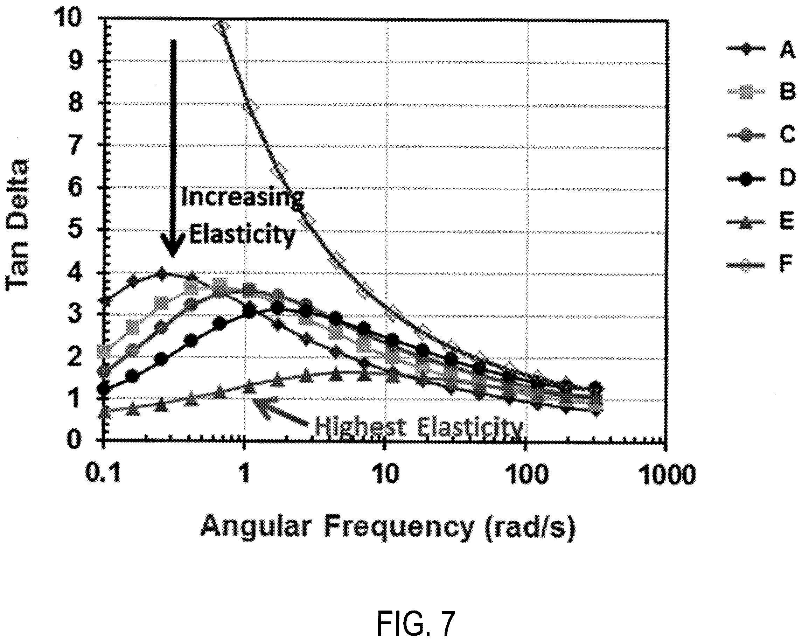

According to various embodiments, the ICP compositions of the present disclosure may display improved properties compared to conventional ICP compositions. For example, the ICP compositions may have a unique, differentiated rheological response at low angular frequencies, resulting in increased elasticity at these frequencies. For example, the ICP compositions according to certain embodiments described herein may display increased storage modulus (G') at low angular frequencies compared to conventional ICP compositions. In specific embodiments, the ICP compositions may have a storage modulus (G') of greater than 100 Pa at an angular frequency of 0.1 rad/s (180°C), or even greater than 150 Pa at an angular frequency of 0.1 rad/s (180°C). Figure 6 displays the storage modulus (G') as a function of angular frequency for several conventional ICP compositions compared to the storage modulus of a composition according to one embodiment of the present disclosure (see plot with triangle Δ data points). According to other embodiments, increased elasticity at low angular frequency may be shown by a decreased tan delta (tanδ) values at specific angular frequencies. According to certain embodiments, the ICP compositions of the present disclosure may have a tanδ value of less than 5.0 at an angular frequency of 0.1 rad/sec (180°C). In other embodiments, the ICP compositions may have a tanδ value of less than 2.0 at an angular frequency of 0.1 rad/sec (180°C) or even have a tanδ value of less than 1.0 at an angular frequency of 0.1 rad/sec (180°C). Figure 7 displays the tan delta values as a function of angular frequency for several conventional ICP compositions compared to the tan delta of a composition according to one embodiment of the present disclosure (see plot with triangle Δ data points).

According to various embodiments, the ICP compositions of the present disclosure may have superior die swell ratios at high melt flow (MF) compared to conventional ICP compositions. Die swell ratios may be measured in accordance with ASTM D3835 - 08: *Standard Test Method for Determination of Properties of Polymeric Materials by Means of a Capillary Rheometer*, at a temperature of 180°C and with a die geometry having a length to diameter ratio (length/diameter) of 10/1.

According to certain embodiments, the ICP compositions may have a MF of 66 g/10min and a die swell ratio of greater than 1.0 at an apparent shear rate of 225 1/sec. In various embodiments, ICP compositions may have a die swell ratio of greater than 1.2 at an apparent shear rate of 225 1/sec, greater than 1.4 at an apparent shear rate of 225 1/sec, greater than 1.5 at an apparent shear rate of 225 1/sec, greater than 2.0 at an apparent shear rate of 225 1/sec, greater than 2.8 at an apparent shear rate of 225 1/sec, greater than 3.5 at an apparent shear rate of 225 1/sec, or even greater than 4.1 at an apparent shear rate of 225 1/sec. In certain embodiments, the ICP compositions having a MF of 70 g/10min or greater may have a die swell ratio of from 1.0 to 5.0, such as, for example, 2.8 to 5.0 at an apparent shear rate of 225 1/sec.

According to various embodiments, the ICP compositions of the present disclosure may have a high crystallinity/isotacticity index compared to conventional ICP compositions. According to various embodiments, the ICP compositions described herein may have a crystallinity/isotacticity index of greater than 96% for XIS. For example, according to various embodiments, the ICP compositions may have a crystallinity/isotacticity index ranging from 96.0% to 96.5% for XIS .

Also described herein are ICP compositions having a MFR of from 15 g/10min to 125 g/10min. In addition, described herein are ICP compositions having a MFR of from 50 g/10min to 125 g/10min.

According to various embodiments, the ICP compositions of the present disclosure may have a reduced volatile organic compound (VOC) content compared to conventional ICP compositions. The ICP compositions may display reduced VOC content via static total emissions that may be 60% lower compared to conventional ICP compositions. Various embodiments of the ICP compositions may have a VOC content of less than 240 μg C/g; 100 μg C/g; or even less than 30 μg C/g, as measured by industry standard PV 3341 or VDA 277.

One benefit of the various embodiments of the ICP compositions having higher EPR content, with high I.V., as described herein includes allowing compounding the high EPR content ICP compositions with other polypropylene polymer compositions to produce blended polymer compositions having desired EPR content. For example, according to various embodiments the present disclosure provides a blended polymer composition comprising from 25% to 99% by weight of any of the various embodiments of the ICP polymer compositions described herein and from 1% to 75% by weight of a second polypropylene polymer composition. In certain embodiments, the second polypropylene polymer composition may comprise a high crystalline, high MFR homopolypropylene (HPP). According to certain embodiments, the second polymer composition may be an HPP having an MFR of greater than 100 g/10min or even greater than 110 g/min. In particular embodiments the HPP composition may have an MFR ranging from 100 g/10 min to 150 g/min. By blending the high EPR content ICP composition with, for example, a second high crystalline, high MFR HPP, the EPR of the final blend can be controlled and diluted (compared to the EPR of the ICP composition). As shown in Table 3, neat blends of the ICP compositions described herein with a commercially available high crystalline, high MFR HPP (for example, an MFR of 120 g/10min) may be produced having a final blend EPR content ranging from 1.0 wt% to 13 wt%. By blending various content of the ICP and HPP polymer compositions, the resulting blend may have desired rheological properties, such as tanδ and/or die swell ratios. In particular, blended polymer compositions may be manufactured having rheological properties that are equivalent to commercial ICP compositions. By this process, polymer compositions displaying diverse rheological properties may be readily manufactured from the ICP compositions and the appropriate amount of readily available HPP polymer compositions.

Table 3: Blended Polymer Compositions

| ICP Composition (wt%) | HPP Composition, MFR 120 g/10min, (wt%) | Final Blend, EPR Content (wt%) |
| --- | --- | --- |
| 100 | 0 | 13 |
| 75 | 25 | 9.8 |
| 65 | 35 | 8.5 |
| 50 | 50 | 6.5 |
| 25 | 75 | 3.3 |

Still other embodiments of the present disclosure provide thermoplastic olefin (TPO) compositions, for example, TPO compositions having properties that allow for the production of articles of manufacture that display improved properties, such as, for example, reduced tiger marking and high gloss. According to various embodiments the TPO compositions comprise from 60% to 70% by weight of an ICP composition as described herein; from 15% to 20% by weight of a polyolefin elastomer; and from 15% to 20% by weight of a filler, such as, for example, talc, fiberglass, carbon fiber, wollasonite, metal oxy sulfate (MOS) and other commercially useful filler compositions, including various combinations of filler materials.

According to various embodiments of the TPO compositions, the TPO composition comprises an ICP composition comprising a polypropylene-based matrix of from 75% to 90% by weight of the composition, and an ethylene propylene copolymer rubber (EPR) phase of from 8% to 25% by weight of the composition, wherein the EPR phase comprises from 35% to 45% by weight of ethylene, a xylenes solubles (XS) content of greater than 8 wt% as determined by acetone precipitation, and an intrinsic viscosity (I.V.) of greater than 6.5 g/dL, wherein the ICP composition has a MFR of greater than 10 g/10min and a tanδ of less than 5.0 at 0.1 rad/s (at 180°C), wherein the MFR of the polypropylene-based matrix phase is greater than 125 g/10min. Other ICP compositions suitable for the various embodiments of the TPO compositions are described in detail herein. According to certain embodiments of the TPO compositions, the TPO composition may comprise from 60% to 65% by weight of the ICP composition, from 17% to 20% by weight of a polyolefin elastomer and from 17% to 20% by weight of a filler, such as, for example, talc, including C impact grade talc. Suitable polyolefin elastomer compositions useful for various embodiments of the TPO compositions herein may include, for example, ENGAGE™ or AFFINITY™ Polyolefin Elastomers commercially available from The Dow Chemical Company, Midland, Michigan; or EXACT™, VERSIFY™, or VISTAMAXX™ from ExxonMobil Chemical, Houston Texas.

The various embodiments of the TPO compositions comprising the ICP compositions may display improved mechanical, impact, and rheological properties compared to commercially available TPO compositions and TPO compositions made from commercially available ICP compositions. For example, the TPO compositions may display improvement in one or more mechanical and/or impact properties selected from flex modulus, MFR, elongation at break, notched Izod impact (RT), and/or multiaxial impact. In addition, the TPO compositions may display improvements in one or more rheological properties, such as increased elasticity as evidenced by a low tanδ compared to conventional TPO compositions. For example, according to various embodiments, the TPO compositions described herein may have a tanδ of less than 3.0 at an angular frequency of 0.1 rad/s (180°C), or even less than 2.0 at an angular frequency of 0.1 rad/s (180°C), and even less than 1.5 at an angular frequency of 0.1 rad/s (180°C). In certain embodiment the TPO may display a tanδ ranging from 0.5 to 3.0 at an angular frequency of 0.1 rad/s (180°C) or even from 0.5 to 2.0 at an angular frequency of 0.1 rad/s (180°C), and even a tanδ ranging from 0.5 to 1.5 at an angular frequency of 0.1 rad/s (180°C).

According to various embodiments, the TPO compositions described herein may display improved rheological characteristics, such as higher gloss and/or reduced tiger marking properties. As described herein, injection molding of large articles of manufacture may suffer from flow marks, often called tiger marking because they may look like stripes on the surface of the large injection molded article. As the TPO composition is injected into a large mold, disparities in the flow, which may be effected by injection speed, melt temperature, mold temperature, etc., may result in tiger marking on the molded article surface as the TPO composition flows further into the mold (i.e. farther from the injection gate). Reduction or elimination of tiger marking on the molded article is desired for larger molded articles. According to various embodiments of the TPO compositions described herein, the TPO composition may have a tiger marking onset distance of greater than 350 mm when measured using a 350 mm by 102 mm injection molding plaque with an injection speed of 127 mm/s, a melt temperature of 205°C, and a mold temperature of 10°C.

According to certain embodiments, the TPO compositions of the present disclosure may further comprise one or more additives. Additives may include, for example, antioxidants, nucleators, acid scavengers, rubber modifiers, polyethylene, dyes, tints, and colors, antimicrobial agents and other common additives. Addition of additives to the TPO composition may alter one or more properties of the TPO composition to improve the overall physical, rheological and/or aesthetic properties of the TPO composition.

Still other embodiments of the TPO compositions may comprise an ICP composition that is a blend of an ICP composition described herein and a second polymer composition comprising a high crystalline, high MFR homopolypropylene (HPP). According to various embodiments, the TPO composition may comprise from 60% to 70% by weight of the blended ICP composition, or in other embodiments from 60% to 65% by weight of the blended ICP composition. Suitable blends of ICP compositions are described in detail herein and may include ratios of ICP composition and HPP that are selected to provide the blend with desired physical and rheological properties. According to various embodiments, the TPO composition may comprise a blended ICP composition that comprises a blend of from 25% to 99% by weight of any of the ICP compositions described herein and from 1% to 75% by weight of a second polymer composition comprising a high crystalline, high MFR homopolypropylene.

The TPO compositions according to the various embodiments described herein are suited for the molding of various articles of manufacture. For example, the TPO compositions may be formed in to pellets and then the pellets may be used, either immediately or after transfer to a molding facility, to mold an article of manufacture. Alternatively, the TPO composition may be formulated and then submitted directly to the molding process to produce an article of manufacture. Thus, certain embodiments of the present disclosure include articles of manufacture comprising a TPO composition according to the various embodiments described herein. As described herein the article of manufacture may be an article of manufacture produced by a molding process so that the article is a molded article. Examples of molding processes include injection molding. Various embodiments of the TPO compositions may be suited for injection molding due to physical or rheological properties of the TPO composition that may result in desired mold functioning of the TPO composition, including for example, reduced tiger marking on the surface of the molded article. According to various embodiments, the molded article may be any article that may be molded by an injection molding process. In certain embodiments, the molded article of manufacture may be a large article. In certain embodiments, the molded article of manufacture may be an automotive part, such as a molded plastic interior or exterior part, including, for example a bumper fascia. As described herein, large injection molded articles may be susceptible to tiger marking and/or low gloss and the TPO compositions described herein may be useful for producing a molded article with high gloss and/or reduced or eliminated tiger marking on the article surface.

Still other embodiments of the present disclosure include methods of making an impact copolymer polypropylene (ICP) composition, such as any of the various embodiments of the ICP compositions described herein. According to certain embodiments, the method comprises polymerizing propylene in the presence of a Ziegler-Natta catalyst in a first stage comprising at least one bulk or gas phase polymerization reactor or combinations thereof to produce a polypropylene-based matrix, for example, a matrix having a melt flow rate (MFR) of greater than 125 g/10min; degassing and then transferring the polypropylene-based matrix phase from the first stage to a second stage comprising at least one gas phase reactor; and polymerizing an ethylene propylene rubber (EPR) phase in the presence of the polypropylene-based matrix in the second stage to produce the EPR phase dispersed in the polypropylene-based matrix phase to produce the impact copolymer polypropylene composition, wherein the EPR phase comprises from 35% to 45% by weight of ethylene, has a xylenes solubles (XS) content of greater than 8 wt% as determined by acetone precipitation, and an intrinsic viscosity (I.V.) of greater than 6.5 dL/g, wherein the polypropylene-based matrix comprises from 75% to 90% by weight of the ICP composition and the EPR phase comprises from 8% to 25% by weight of the ICP composition, and wherein the ICP composition has a MFR of greater than 10 g/10min and a tanδ of less than 5.0 at 0.1 rad/s (180°C). The described method may be suited for producing any of the ICP compositions described herein.

According to certain embodiments, the methods may further comprise incorporating the ICP composition into a TPO composition. For example, in certain embodiments the method may further comprise blending the ICP composition with an elastomer, such as a polyolefin elastomer as described herein, and an additive, such as described herein, including but not limited to, talc to produce the TPO composition. In certain embodiments, the method may further comprise pelletizing the TPO composition to form a pelletized TPO composition which may then be stored and/or shipped to a molding facility.

In various embodiments, the method may further comprise forming the TPO composition into an article of manufacture, such as any of the articles of manufacture described herein. The TPO composition may be formed into an article of manufacture by a molding process, such as an injection molding process. The TPO may be converted into the article of manufacture directly after formulation of the TPO composition or, alternatively, the TPO may be initially formed into pellets or other suitable shape and then converted into the article of manufacture by melting the pellets and using them in a molding process, for example, melting the pellets and submitting them to an injection molding process.

As used in this specification and the appended claims, the singular forms "a", "and", and "the" include plural referents unless the context clearly dictates otherwise. Thus, for example, reference to "a polymer" includes one or more polymers.

Unless otherwise indicated, all numbers expressing quantities of ingredients, time, temperatures, and so forth used in the present specification and claims are to be understood as being modified in all instances by the term "about." Accordingly, unless indicated to the contrary, the numerical parameters set forth in the following specification and claims are approximations that may vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, the numerical values set forth in the specific examples are reported as precisely as possible. Any numerical value, however, may inherently contain certain errors necessarily resulting from the standard deviation found in their respective testing measurements.

It should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10. Also, unless denoted otherwise, percentages of components in a composition are presented as weight percent.

It is to be understood that this invention is not limited to specific compositions, components or process steps disclosed herein, as such may vary. It is also to be understood that the terminology used herein is for the purpose of describing particular embodiments only, and is not intended to be limiting. Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

EXAMPLES

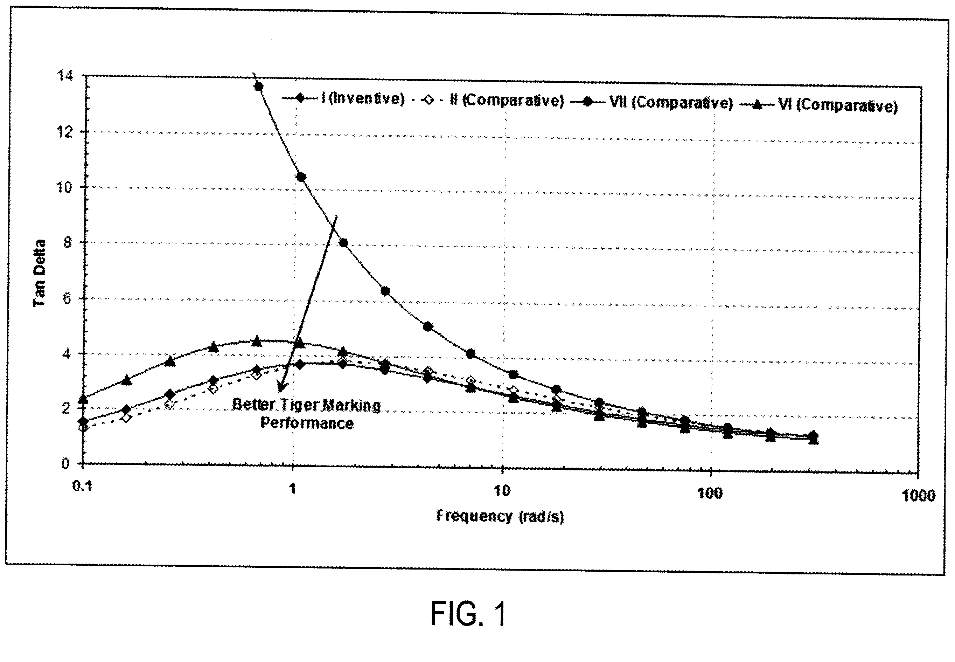

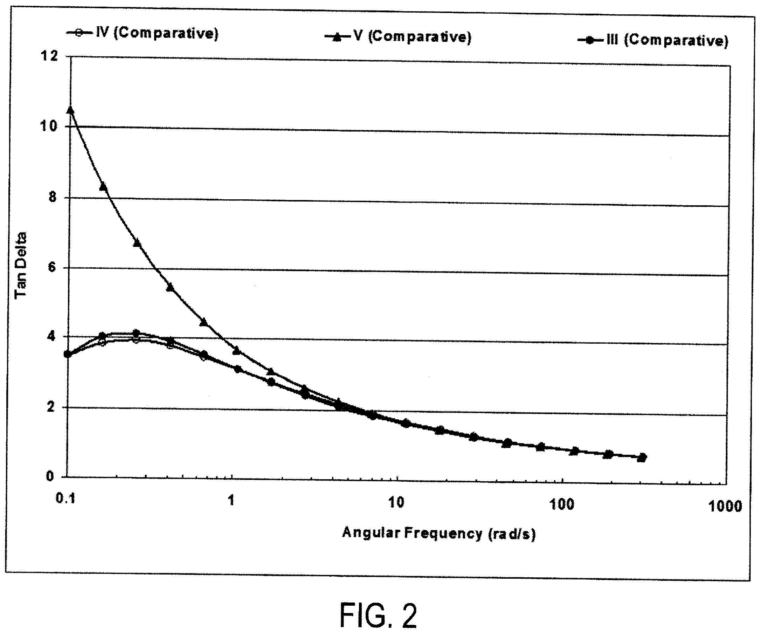

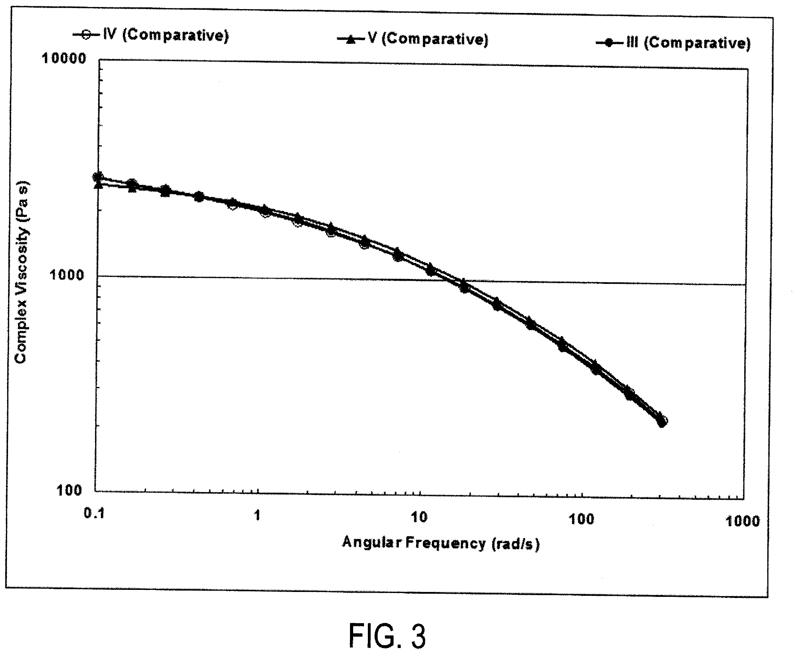

The present disclosure will now be described in the following non-limiting examples, as summarized in the Tables and Figures, below. Examples substantiating the present disclosure are included in Tables 4-7 and Figures 1-3 below. Some observations of the disclosed examples include:

Table 4 shows that with an I.V. ratio between the EPR phase and the propylene-based matrix of > 4, the count of large gels is surprisingly low ("excellent" gels performance) while the tiger marking performance is simultaneously excellent (tan$\delta$ < 5 at 0.1 rad/s; 180°C). As mentioned previously, the I.V. of the EPR phase is defined in this invention as the I.V. of the xylene solubles fraction precipitated from acetone. The I.V. of the propylene-based (matrix) phase is approximated here as the I.V. of the XIS portion of the composition which was verified experimentally. At a given composition MFR, tan$\delta$ at low frequency (0.1 rad/s, 180°C) is a reflection of a combination of various molecular characteristics of the composition (e.g., % content of the rubber copolymer, the I.V. ratio between EPR and HPP phases, the co-monomer incorporation and composition in the rubber phase, MW of the matrix and rubber phases, MWD of the matrix and rubber phases, etc.).

In Tables 5-6, it is observed that at the same extruder conditions, type of screw and filter media, the inventive composition has a significantly reduced count of large gels (in combination with excellent tiger marking performance) relative to comparative compositions of similar MFR and I.V. ratio that have excellent tiger marking performance (e.g., those made with the slurry/solvent process). The inventive composition surprisingly depicts a reduction of gels of size > 500 microns by at least 90% (significant reduction) relative to comparative compositions of similar MFR, I.V. ratio and tiger marking performance (similar low frequency tan$\delta$) made with the slurry/solvent process. Even with the use of advanced filter media (e.g., FMF), the inventive composition surprisingly has significantly less count of large gels relative to comparative compositions (Table 5).

Table 7 shows the mechanical properties in filled compounds of the comparative compositions (e.g., compositions made with the slurry/solvent process).

Figures 1-3 demonstrate examples of dynamic rheology flow curves of inventive composition relative to conventional (comparative) compositions. It is noted that at a similar viscosity flow curve, the inventive composition has similar or improved melt elasticity relative to the conventional compositions, resulting in excellent tiger marking performance. The maximum in tan delta at low frequencies is a good indicator of elastic response (associated with the high MW species) that stabilizes the flow front in the mold, delaying the occurrence of tiger marking.

Table 4: Summary of exemplary inventive and comparative compositions

| Composition | Status | Reactor Process | MFR (dg/min) | I.V. (XS AP) / I.V. (XIS) | Tan Delta @ 0.4 rad/s, 180 °C |
|---|---|---|---|---|---|
| I | Inventive | Bulk/Gas | 139 | 7.9 | 3.1 |
| II | Comparative | Slurry/ Solvent | 116 | 7.3 | 2.8 |
| III | Comparative | Bulk/Gas | 16 | 4.8 | 3.4 |
| IV | Comparative | Slurry/ Solvent | 17 | 4.4 | 3.7 |
| V | Comparative | Bulk/Gas | 16 | 1.9 | 5.7 |
| VI | Comparative | Bulk/Gas | 97 | 5.5 | 4.2 |
| VII | Comparative | Bulk/Gas | 95 | 2.7 | 18 |
| **Composition** | **Status** | **Reactor Process** | **Tan Delta @ 0.1 rad/s, 180 °C** | **Tiger Marking Performance** | **Large Gels Count** |
| I | Inventive | Bulk/Gas | 1.5 | Excellent | Excellent |
| II | Comparative | Slurry/ Solvent | 1.3 | Excellent | Poor |
| III | Comparative | Bulk/Gas | 3.0 | Excellent | Excellent |
| IV | Comparative | Slurry/ Solvent | 3.1 | Excellent | Poor |
| V | Comparative | Bulk/Gas | 11.0 | Poor | Excellent |
| VI | Comparative | Bulk/Gas | 2.4 | Excellent | Excellent |
| VII | Comparative | Bulk Gas | 39.7 | Poor | Excellent |

where
The ratio I.V. (XS AP) / I.V. (XIS) approximates the viscosity ratio between the rubber and HPP matrix phases of the composition, and large gels are defined as particles of size greater than about 500 microns.
All data of Table 1 correspond to samples prepared with a 30 mm twin screw extruder using a 60 mesh screen. The effect of mesh size on rheological parameters was found to be negligible.

Table 5: Gels (> 500 microns) and total particles (~1-1700 microns) count (per 1 m$^2$ of cast film) of inventive and comparative compositions compounded on 30 mm twin screw extruder. All samples were compounded on the same extruder conditions (see Table 1). Tiger marking rating: 5-10 (worst to best), 9-10: "excellent", 5-8: "poor" (unacceptable).

| Composition | Status | Mesh Size | Gels (> 500 microns) / m$^2$ of film | Tiger Marking Rating |
|---|---|---|---|---|
| I | Inventive | 60 | 257 | 10 |
| VI | Comparative | 60 | 153 | 9 |
| II | Comparative | 60 | 2606 | 10 |
| VII | Comparative | 60 | 3 | 6 |
| | | | | |
| I | Inventive | 200 | 38 | 10 |
| II | Comparative | 200 | 721 | 10 |
| | | | | |

(continued)

| Composition | Status | Mesh Size | Gels (> 500 microns) / m$^2$ of film | Tiger Marking Rating |
|---|---|---|---|---|
| I | Inventive | 75 AL3 FMF | 21 | 10 |
| II | Comparative | 75 AL3 FMF | 306 | 10 |
| | | | | |
| III | Comparative | 60 | 101 | 10 |
| IV | Comparative | 60 | 1406 | 10 |
| V | Comparative | 60 | 2 | 5 |
| | | | | |
| III | Comparative | 200 | 15 | 10 |
| IV | Comparative | 200 | 366 | 10 |
| | | | | |
| III | Comparative | 75 AL3 FMF | 11 | 10 |
| IV | Comparative | 75 AL3 FMF | 96 | 10 |

Table 6: Gels (> 500 microns) and total particles (~1-1700 microns) count (per 1 m$^2$ of cast film) comparison of inventive and comparative compositions compounded on 38 mm single screw extruder. All samples were compounded on the same extruder conditions (see Table 2). Tiger marking rating: 5-10 (worst to best), 9-10: "excellent", 5-8: "poor" (unacceptable).

| Composition | Status | Mesh Size | Gels (> 500 microns) /m$^2$ of film | Tiger Marking Rating |
|---|---|---|---|---|
| I | Inventive | 60 | 313 | 10 |
| II | Comparative | 60 | 1634 | 10 |
| | | | | |
| I | Inventive | 200 | 102 | 10 |
| II | Comparative | 200 | 326 | 10 |
| | | | | |
| III | Comparative | 60 | 139 | 10 |
| IV | Comparative | 60 | 1141 | 10 |
| | | | | |
| III | Comparative | 200 | 26 | 10 |
| IV | Comparative | 200 | 249 | 10 |

Table 7: Summary of mechanical properties of comparative compositions in filled compounds. The formulation in % weight is: 68.53% composition, 10% talc (Cimpact 710C, Rio Tinto), 21.32% impact modifier (Engage ENR 7467, Dow Chemical Company) and 0.15% antioxidant B225.

| Composition | Status | MFR (dg/min -- filled compound | 1% Secant Modulus (psi) | Izod Impact @ 23 °C (ft-lb$_f$/in) | % Elongation to Break | % Yield Strain | Yield Stress (psi) | IIMP Total Energy @ - 20 °C (ft-lbs ) | IIMP Energy Max Load @ - 20 °C (ft-lbs) |
|---|---|---|---|---|---|---|---|---|---|
| III | Comparative | 7.0 | 177,600 | 100% NB | 237 | 9.6 | 3,029 | 31.1 | 19.1 |
| IV | Comparative | 7.7 | 173,200 | 100% NB | 244 | 9.4 | 3,011 | 33.0 | 20.0 |
| V | Comparative | 8.6 | 175,800 | 100% NB | 221 | 9.4 | 3,048 | 31.9 | 19.2 |
| | | | | | | | | | |
| VI | Comparative | 46 | 186,900 | 2.0 | 33 | 4.9 | 2,888 | 14.3 | 14.0 |
| VII | Comparative | 43 | 172,500 | 1.9 | 27 | 4.3 | 2,606 | 11.2 | 11.1 |

In-reactor as well as extruder based heterophasic blends of a propylene based matrix with a propylene/ethylene or other propylene/alpha-olefin impact modifier (rubber) can be used. Single and twin screw extruders can be also used. Although a relatively coarse mesh wire screen (e.g., 60 mesh) is sufficient and in most cases preferable, finer mesh wire screens or more advanced screen media [e.g., fiber metal felt (FMF)] can also be utilized, as described in US 20080268244 A1.

In a preferred embodiment, the composition of the present disclosure comprises a combination of excellent product performance attributes including, but not limited to, tiger marking performance, low gels count, mold flowability and mechanical properties (either in standalone composition or filled compounds) despite the existence of a high viscosity ratio between rubber and matrix phases.

The use of a coarse mesh wire screen (e.g., 60 mesh wire screen), while still achieving low gels count in either a single or twin screw has great processing advantages (e.g., higher production rates, less frequency of change of filter media, lower die pressures etc.). Low levels of volatile organic content, inherent to the inventive composition, are also highly advantageous in different applications of molded parts.

The combination of excellent tiger marking performance and low gel count, despite the high viscosity ratio between the EPR and HPP phases of the composition, in conjunction with the bulk/gas-phase process of the present disclosure and use of a rather coarse mesh screen (e.g., 60 mesh) is unexpected and advantageous.

The retention or improvement of mechanical properties in standalone compositions or their filled compounds relative to conventional compositions that exhibit excellent tiger performance and high gels count (e.g., due to high viscosity ratio) is counterintuitive and surprising. The low levels of volatiles in conjunction with the above unique set of product performance attributes is unexpected.

An in-reactor heterophasic blend is preferred relative to an extruder heterophasic blend due to cost savings and improved dispersion of the different phases of the composition. A twin screw extruder preferably gives the best balance of product attributes.

**Claims**

1. An impact copolymer propylene (ICP) composition comprising:

    a polypropylene-based matrix of from 75% to 90% by weight of the composition; and
    an ethylene propylene copolymer rubber (EPR) phase of from 8% to 25% by weight of the composition, wherein the EPR phase comprises from 35% to 45% by weight of ethylene, a xylenes solubles (XS) content of greater than 8 wt% as determined by acetone precipitation, and an intrinsic viscosity (I.V.) of greater than 6.5 dL/g, wherein the ICP composition has a MFR of greater than 10 g/10min and a tan$\delta$ of less than 5.0 at 0.1 rad/s (180°C),

    wherein the polypropylene-based matrix has a MFR of greater than 125 g/10min.

2. The composition according to claim 1, wherein the polypropylene-based matrix has a MFR of greater than 200 g/10min, preferably greater than 250 g/10min.

3. The composition according to claim 1 or claim 2, wherein the EPR has an I.V. of greater than 7.0 dL/g.

4. The composition according to any one of claims 1-3, wherein the ICP composition has a tan$\delta$ of less than 1.0 at 0.1 rad/s (180°C).

5. The composition according to any one of claims 1-4, wherein the ICP composition has a die swell ratio of greater than 1.0 at an apparent shear rate of 225 1/sec, preferably greater than 2.0 at an apparent shear rate of 225 1/sec, and more preferably greater than 3.5 at an apparent shear rate of 225 1/sec.

6. The composition according to any one of claims 1-5, wherein the ICP composition has a crystallinity/isotacticity index of greater than 96% for XIS.

7. The composition according to any one of claims 1-6, wherein the ICP composition has a storage modulus (G') of greater than 100 Pa at an angular frequency of 0.1 rad/s (180°C).

8. The composition according to any one of claims 1-7, wherein the ICP composition has a volatile organic compound (VOC) content of less than 240 $\mu$g C/g as measured by PV3341.

9. The composition according to any one of claims 1-8, comprising from 25% to 99% by weight of the ICP composition, and further comprising from 1% to 75% by weight of a second polymer composition comprising a high crystalline, high MFR homopolypropylene (HPP).

10. The composition according to claim 9, wherein the second polymer composition is a HPP having an MFR of greater than 100 g/10min.

11. A thermoplastic olefin (TPO) composition comprising:

from 60% to 70% by weight of an impact copolymer propylene (ICP) composition according to any one of claims 1-10;
from 15% to 20% by weight of a polyolefin elastomer; and
from 15% to 20% by weight of talc.

12. The thermoplastic olefin composition according to claim 11, wherein the TPO composition comprises from 60% to 65% by weight of the ICP composition, from 17% to 20% by weight of the polyolefin elastomer, and from 17% to 20% by weight of talc.

13. The thermoplastic olefin composition according to claim 11 or claim 12, wherein the TPO composition has a $\tan\delta$ of less than 3.0 at 0.1 rad/s (180°C).

14. The thermoplastic olefin composition according to any one of claims 11-13, wherein the composition has a tiger marking onset distance of greater than 350 mm.

15. An article of manufacture comprising the thermoplastic olefin (TPO) composition according to any one of claims 11-14, wherein preferably the article of manufacture is a molded article, and more preferably the article of manufacture is a molded automotive part.

16. A method of making an impact copolymer propylene (ICP) composition comprising:

polymerizing propylene in the presence of a Ziegler-Natta catalyst in a first stage comprising at least one bulk or gas phase polymerization reactor or combinations thereof to produce a polypropylene-based matrix having a melt flow rate (MFR) of greater than 125 g/10min;
upon degassing, transferring the polypropylene-based matrix phase from the first stage to a second stage comprising at least one gas phase reactor; and
polymerizing an ethylene propylene rubber (EPR) phase in the presence of the polypropylene-based matrix in the second stage to produce the EPR phase dispersed in the polypropylene-based matrix phase to produce the impact copolymer polypropylene composition, wherein the EPR phase comprises from 35% to 45% by weight of ethylene, has a xylenes solubles (XS) content of greater than 8 wt% as determined by acetone precipitation, and an intrinsic viscosity (I.V.) of greater than 6.5 dL/g,
wherein the polypropylene-based matrix comprises from 75% to 90% by weight of the ICP composition and the EPR phase comprises from 8% to 25% by weight of the ICP composition, and

wherein the ICP composition has a MFR of greater than 10 g/10min and a $\tan\delta$ of less than 5.0 at 0.1 rad/s (180°C).

17. The method according to claim 16, further comprising blending the ICP composition with a polyolefin elastomer and talc to form a thermoplastic olefin (TPO) composition, and optionally further comprising pelletizing the TPO composition to form a pelletized TPO composition.

## Patentansprüche

1. Eine schlagfeste Copolymer-Propylen-Zusammensetzung (ICP-Zusammensetzung), die Folgendes beinhaltet:

eine polypropylenbasierte Matrix von 75 Gew.-% bis 90 Gew.-% der Zusammensetzung; und
eine Ethylen-Propylen-Copolymer-Kautschuk(EPR)-Phase von 8 Gew.-% bis 25 Gew.-% der Zusammensetzung, wobei die EPR-Phase zu 35 Gew.-% bis 45 Gew.-% Ethylen, einen Gehalt an xylenelöslichen Substanzen (XS) von mehr als 8 Gew.-%, wie durch Acetonfällung bestimmt, und eine Grenzviskosität (I.V.) von mehr als 6,5 dl/g beinhaltet,

wobei die ICP-Zusammensetzung einen MFR von mehr als 10 g/10 min und einen tanδ von weniger als 5,0 bei 0,1 rad/s (180 °C) aufweist,

wobei die polypropylenbasierte Matrix einen MFR von mehr als 125 g/10 min aufweist.

2. Zusammensetzung gemäß Anspruch 1, wobei die polypropylenbasierte Matrix einen MFR von mehr als 200 g/10 min, vorzugsweise von mehr als 250 g/10 min aufweist.

3. Zusammensetzung gemäß Anspruch 1 oder Anspruch 2, wobei der EPR eine I.V. von mehr als 7,0 dl/g aufweist.

4. Zusammensetzung gemäß einem der Ansprüche 1-3, wobei die ICP-Zusammensetzung bei 0,1 rad/s (180 °C) einen tanδ von weniger als 1,0 aufweist.

5. Zusammensetzung gemäß einem der Ansprüche 1-4, wobei die ICP-Zusammensetzung ein Ausdehnungsverhältnis von mehr als 1,0 bei einer scheinbaren Schergeschwindigkeit von 225 1/s, vorzugsweise mehr als 2,0 bei einer scheinbaren Schergeschwindigkeit von 225 1/s und noch bevorzugter mehr als 3,5 bei einer scheinbaren Schergeschwindigkeit von 225 1/s aufweist.

6. Zusammensetzung gemäß einem der Ansprüche 1-5, wobei die ICP-Zusammensetzung einen Kristallinitäts-/Isotaktizitätsindex von mehr als 96 % für XIS aufweist.

7. Zusammensetzung gemäß einem der Ansprüche 1-6, wobei die ICP-Zusammensetzung bei einer Winkelfrequenz von 0,1 rad/s (180 °C) einen Speichermodul (G') von mehr als 100 Pa aufweist.

8. Zusammensetzung gemäß einem der Ansprüche 1-7, wobei die ICP-Zusammensetzung einen Gehalt an flüchtigen organischen Verbindungen (VOC) von weniger als 240 μg C/g, wie durch PV3341 gemessen, aufweist.

9. Zusammensetzung gemäß einem der Ansprüche 1-8, die zu 25 Gew.-% bis 99 Gew.-% die ICP-Zusammensetzung beinhaltet und ferner zu 1 Gew.-% bis 75 Gew.-% eine zweite Polymerzusammensetzung beinhaltet, die ein hoch kristallines Homopolypropylen (HPP) mit hohem MFR beinhaltet.

10. Zusammensetzung gemäß Anspruch 9, wobei die zweite Polymerzusammensetzung ein HPP mit einem MFR von mehr als 100 g/10 min ist.

11. Eine Zusammensetzung thermoplastischen Olefins (TPO), die Folgendes beinhaltet:

zu 60 Gew.-% bis 70 Gew.-% eine schlagfeste Copolymer-Propylen-Zusammensetzung (ICP-Zusammensetzung) gemäß einem der Ansprüche 1-10;
zu 15 Gew.-% bis 20 Gew.-% ein Polyolefinelastomer; und
zu 15 Gew.-% bis 20 Gew.-% Talk.

12. Zusammensetzung thermoplastischen Olefins gemäß Anspruch 11, wobei die TPO-Zusammensetzung zu 60 Gew.-% bis 65 Gew.-% die ICP-Zusammensetzung, zu 17 Gew.-% bis 20 Gew.-% das Polyolefinelastomer und zu 17 Gew.-% bis 20 Gew.-% Talk beinhaltet.

13. Zusammensetzung thermoplastischen Olefins gemäß Anspruch 11 oder Anspruch 12, wobei die TPO-Zusammensetzung bei 0,1 rad/s (180 °C) einen tanδ von weniger als 3,0 aufweist.

14. Zusammensetzung thermoplastischen Olefins gemäß einem der Ansprüche 11-13, wobei die Zusammensetzung eine Tigermarkierungs-Startentfernung von mehr als 350 mm aufweist.

15. Ein Herstellungsartikel, der die Zusammensetzung thermoplastischen Olefins (TPO) gemäß einem der Ansprüche 11-14 beinhaltet, wobei der Herstellungsartikel vorzugsweise ein Formartikel ist und wobei der Herstellungsartikel noch bevorzugter ein Automobilformteil ist.

16. Ein Verfahren zum Herstellen einer schlagfesten Copolymer-Propylen-Zusammensetzung (ICP-Zusammensetzung), das Folgendes beinhaltet:

Polymerisieren von Propylen in Gegenwart eines Ziegler-Natta-Katalysators in einer ersten Stufe, die mindestens einen Masse- oder einen

Gasphasenpolymerisationsreaktor oder Kombinationen davon beinhaltet, um eine polypropylenbasierte Matrix mit einem Schmelzdurchfluss (MFR) von mehr als 125 g/10 min zu produzieren;

bei Entgasung, Transferieren der polypropylenbasierten Matrixphase von der ersten Stufe zu einer zweiten Stufe, die mindestens einen Gasphasenreaktor beinhaltet; und

Polymerisieren einer Ethylen-Propylen-Kautschuk(EPR)-Phase in Gegenwart der polypropylenbasierten Matrix in der zweiten Stufe, um die in der polypropylenbasierten Matrixphase dispergierte EPR-Phase zu produzieren, um die schlagfeste Copolymer-Polypropylen-Zusammensetzung zu produzieren, wobei die EPR-Phase zu 35 Gew.-% bis 45 Gew.-% Ethylen beinhaltet, einen Gehalt an xylenelöslichen Substanzen (XS) von mehr als 8 Gew.-%, wie durch Acetonfällung bestimmt, und eine Grenzviskosität (I.V.) von mehr als 6,5 dl/g aufweist, wobei die polypropylenbasierte Matrix 75 Gew.-% bis 90 Gew.-% der ICP-Zusammensetzung ausmacht und die EPR-Phase 8 Gew.-% bis 25 Gew.-% der ICP-Zusammensetzung ausmacht, und

wobei die ICP-Zusammensetzung einen MFR von mehr als 10 g/10 min und einen tan$\delta$ von weniger als 5,0 bei 0,1 rad/s (180 °C) aufweist.

17. Verfahren gemäß Anspruch 16, das ferner das Mischen der ICP-Zusammensetzung mit einem Polyolefinelastomer und Talk zum Bilden einer Zusammensetzung thermoplastischen Olefins (TPO) beinhaltet und das optional ferner das Pelletieren der TPO-Zusammensetzung zum Bilden einer pelletierten TPO-Zusammensetzung beinhaltet.

## Revendications

1. Une composition de propylène copolymère résistant aux chocs (ICP, Impact Copolymer Propylene) comprenant :

une matrice à base de polypropylène allant de 75 % à 90 % en poids de la composition ; et
une phase caoutchouc copolymère d'éthylène-propylène (EPR, Ethylene Propylene copolymer Rubber) allant de 8 % à 25 % en poids de la composition, où la phase EPR comprend de 35 % à 45 % en poids d'éthylène, une teneur en solubles dans les xylènes (XS, Xylenes Solubles) de plus de 8 % en poids telle que déterminée par précipitation à l'acétone, et une viscosité intrinsèque (I.V., Intrinsic Viscosity) de plus de 6,5 dL/g, où la composition d'ICP a un MFR (Melt Flow Rate, indice de fluidité à chaud) de plus de 10 g/10 min et une tan$\delta$ de moins de 5,0 à 0,1 rad/s (180 °C), où la matrice à base de polypropylène a un MFR de plus de 125 g/10 min.

2. La composition selon la revendication 1, où la matrice à base de polypropylène a un MFR de plus de 200 g/10 min, de préférence de plus de 250 g/10 min.

3. La composition selon la revendication 1 ou la revendication 2, où l'EPR a une I.V. de plus de 7,0 dL/g.

4. La composition selon n'importe laquelle des revendications 1 à 3, où la composition d'ICP a une tan$\delta$ de moins de 1,0 à 0,1 rad/s (180 °C).

5. La composition selon n'importe laquelle des revendications 1 à 4, où la composition d'ICP a un rapport de gonflement à la filière de plus de 1,0 à un taux de cisaillement apparent de 225 1/sec, de préférence de plus de 2,0 à un taux de cisaillement apparent de 225 1/sec, et de préférence encore de plus de 3,5 à un taux de cisaillement apparent de 225 1/sec.

6. La composition selon n'importe laquelle des revendications 1 à 5, où la composition d'ICP a un indice de cristallinité/isotacticité de plus de 96 % pour les XIS (Xylene Insolubles, insolubles dans le xylène).

7. La composition selon n'importe laquelle des revendications 1 à 6, où la composition d'ICP a un module de conservation (G') de plus de 100 Pa à une fréquence angulaire de 0,1 rad/s (180 °C).

8. La composition selon n'importe laquelle des revendications 1 à 7, où la composition d'ICP a une teneur en composés organiques volatils (VOC, Volatile Organic Compound) de moins de 240 $\mu$g C/g telle que mesurée par PV3341.

9. La composition selon n'importe laquelle des revendications 1 à 8, comprenant de 25 % à 99 % en poids de la composition d'ICP, et comprenant en sus de 1 % à 75 % en poids d'une deuxième composition de polymère comprenant un homopolypropylène (HPP) hautement cristallin, à haut MFR.

10. La composition selon la revendication 9, où la deuxième composition de polymère est un HPP ayant un MFR de plus de 100 g/10 min.

11. Une composition d'oléfine thermoplastique (TPO, Thermoplastic Olefin) comprenant :

de 60 % à 70 % en poids d'une composition de propylène copolymère résistant aux chocs (ICP) selon n'importe laquelle des revendications 1 à 10 ;
de 15 % à 20 % en poids d'un élastomère de polyoléfine ; et
de 15 % à 20 % en poids de talc.

12. La composition d'oléfine thermoplastique selon la revendication 11, où la composition de TPO comprend de 60 % à 65 % en poids de la composition d'ICP, de 17 % à 20 % en poids de l'élastomère de polyoléfine, et de 17 % à 20 % en poids de talc.

13. La composition d'oléfine thermoplastique selon la revendication 11 ou la revendication 12, où la composition de TPO a une tan$\delta$ de moins de 3,0 à 0,1 rad/s (180 °C).

14. La composition d'oléfine thermoplastique selon n'importe laquelle des revendications 11 à 13, où la composition a une distance d'apparition de marque zébrée de plus de 350 mm.

15. Un article manufacturé comprenant la composition d'oléfine thermoplastique (TPO) selon n'importe laquelle des revendications 11 à 14, où de préférence l'article manufacturé est un article moulé, et de préférence encore l'article manufacturé est une pièce automobile moulée.

16. Un procédé de réalisation d'une composition de propylène copolymère résistant aux chocs (ICP) comprenant :

la polymérisation de propylène en présence d'un catalyseur de Ziegler-Natta dans un premier stade comprenant au moins un réacteur de polymérisation en phase massique ou gazeuse ou des combinaisons de ceux-ci afin de produire une matrice à base de polypropylène ayant un indice de fluidité à chaud (MFR) de plus de 125 g/10 min ;
à la suite du dégazage, le transfert de la phase matrice à base de polypropylène d'un premier stade à un deuxième stade comprenant au moins un réacteur en phase gazeuse ; et
la polymérisation d'une phase caoutchouc d'éthylène-propylène (EPR) en présence de la matrice à base de polypropylène dans le deuxième stade afin de produire la phase EPR dispersée dans la phase matrice à base de polypropylène afin de produire la composition de polypropylène copolymère résistant aux chocs, où la phase EPR comprend de 35 % à 45 % en poids d'éthylène, a une teneur en solubles dans les xylènes (XS) de plus de 8 % en poids telle que déterminée par précipitation à l'acétone, et une viscosité intrinsèque (I.V.) de plus de 6,5 dL/g,
où la matrice à base de polypropylène représente de 75 % à 90 % en poids de la composition d'ICP et la phase EPR représente de 8 % à 25 % en poids de la composition d'ICP, et
où la composition d'ICP a un MFR de plus de 10 g/10 min et une tan$\delta$ de moins de 5,0 à 0,1 rad/s (180 °C).

17. Le procédé selon la revendication 16, comprenant en sus le mélange homogène de la composition d'ICP avec un élastomère de polyoléfine et du talc afin de former une composition d'oléfine thermoplastique (TPO), et comprenant facultativement en sus la granulation de la composition de TPO afin de former une composition de TPO granulée.

FIG. 1

EP 3 087 135 B1

FIG. 2

EP 3 087 135 B1

FIG. 3

FIG. 4

FIG. 5

EP 3 087 135 B1

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4771103 A
- US 5461115 A
- US 5854355 A
- US 5410002 A
- US 20080161610 A1
- US 20050203259 A1
- US 6466875 B, Mitsutani
- US 6777497 B
- US 7282537 B
- US 7504455 B, Grein
- US 6518363 B
- US 6472477 B
- US 20060194924 A
- US 6441081 B
- US 6667359 B
- US 7064160 B
- US 7217772 B
- US 20060217502 A
- US 20050203259 A
- US 20080161510 A1
- US 20080268244 A1

### Non-patent literature cited in the description

- **SNYDER, A.** *A Unique High Stiffness, High Melt Flow Impact PP Copolymer From a Solvent/Slurry Process, 9th International Business Forum on Specialty Polyolefins, Scotland (SPO 99) Conference,* 12 October 1999
- **NELLO PASQUINI.** Polypropylene Handbook. 2005, 226-227
- **HIRANO et al.** *J. Applied Polym. Sci.,* 2007, vol. 104, 192-199
- **PATHAN et al.** *J. Applied Polym. Sci.,* 2005, vol. 96, 423-434
- **MAEDA et al.** *Nihon Reoroji Gakkaishi,* 2007, vol. 35, 293-299
- **NELLO PASQUINI.** Polypropylene Handbook. 2005
- **VAN VEN.** Polypropylene and Other Polyolefins. Elsevier Science Publishing Company, Inc, 1990, 119-125
- *Snyder,* 1999
- **W.S. FONG ; R.L. MAGOVERN ; M. SACKS.** Polypropylene. SRI International, April 1980
- **MAEDA, S. ; K. FUKUNAGA ; E. KAMEI.** Flow mark in the injection molding of polypropylene/rubber/talc blends. *Nihon Reoroji Gakkaishi,* 2007, vol. 35, 293-299